# EUROPEAN PATENT APPLICATION

(11) **EP 1 172 745 A1**
(43) Date of publication of application: **16.01.2002**
(21) Application number: 00660127.2
(22) Date of filing: 12.07.2000
(51) Int. Cl.: G06F 17/60

(54) **Advertising/information campaign management**

(71) Applicant: Sonera Oyj, 00510 Helsinki (FI)
(72) Inventor: Nyberg, Hanna-Maija, 00200 Helsinki (FI)
(74) Representative: Virkkala, Jukka Antero

(57) **Abstract**

A method of managing an information campaign having several tasks. Many of the tasks relate to processing of images. The method comprises centrally administering a campaign database (CD) and an image database (ID) and entering into the campaign database (CD) the contact data of the participant responsible for each campaign task (P11 to P62). The campaign database (CD) is automatically updated in response to the completion of a campaign task. The campaign database (CD) determines the contact data of the participant responsible for the next campaign task and automatically informs this participant about the completion of the preceding campaign task. On the basis of the relevant task data (P11 to P62), different resolutions of the images of the image database (ID) are produced.

## Description

### Background of the invention

The invention relates to methods and equipment for advertising/information campaign management. Advertising campaign management involves numerous pre-planning and planning stages relating to the campaign in general and individual advertisements; production stages, such as colour separation and printing/post-processing (if the advertisements are to be printed), etc. In this context, the term 'campaign owner' refers to the entity responsible for publishing the information. In the context of advertising, the 'campaign owner' is the company whose brand name, products and/or services are the subject of the campaign.

An advertising or information campaign typically involves several subcontractors which are independent of the campaign owner. Each subcontractor carries out one or more campaign phases. For instance, a campaign employing printed media involves, in addition to the campaign owner, an advertising agency that design layouts and text, a media agency that designs the distribution of the campaign, a pre-press company such as a repro, and the actual printing company. Such a network of independent entities causes several problems.

A first problem is that sending images between the campaign owner and the various subcontractors is cumbersome. Sending images physically (as negatives, transparencies, prints or colour separations) is time-consuming and requires multiple copies of the images if the campaign is being executed in parallel, such as in several countries. Sending images online and storing them locally requires vast amounts of time and storage space, considering that one uncompressed A4-size high-resolution colour image may require hundreds of megabytes. Prior solutions to this problem are based on storing the images in different resolutions. For instance, an advertising agency may use a low-resolution image for planning, whereas the printer uses the corresponding high-resolution image for printing. However, the multi-resolution approach causes at least two more problems: images at a fixed resolution do not scale well, and the images have to be stored in multiple resolutions, which requires even more storage space and requires careful version control. That is, updating an image requires updating all resolutions of the image.

A second problem with prior art advertising campaign management is that the campaign owner has little control over the individual processing stages. For instance, it is difficult to ensure that company logos, trademarks and slogans are used according to company policies. Further, it is difficult to keep track of the time tables associated with the processing stages. Yet further, performing parallel subtasks frequently causes extra overhead. For instance, a manufacturer may send transparencies to distributors in several countries, and each distributor has colour separations made separately.

These problems are not limited to advertising in a narrow sense. For instance, a government office carrying out an information campaign faces similar problems. In other words, the government office wants to "sell" ideas and enhance the public acceptance of the ideas.

### Disclosure of the invention

An object of the invention is to provide a mechanism for solving the two problems simultaneously. This object is achieved by a method and equipment which are characterized by what is disclosed in the attached independent claims. Preferred embodiments of the invention are disclosed in the attached dependent claims.

The invention can be carried out by a method which comprises the following steps:
centrally administering a campaign database and an image database;
the campaign database indicating the participant responsible for each campaign phase;
in response to the completion of a campaign phase, updating the campaign database,
in response to the updating step, determining on the basis of the computer model the participant responsible for the next campaign phase and automatically informing this participant about the completion of the preceding step; and
producing different resolutions of the images of the image database depending on the campaign phase in question.

Central administration of the campaign database and the image database means that the campaign owner can keep track of the completion of the campaign phases and their results. Instead of the advertising agency sending layouts to the repro, and the repro sending colour separations to the printing house, all subcontractors intercommunicate via the centrally administered databases. Central administration also means that the campaign owner or a trusted subcontractor can grant and revoke database access rights to the subcontractors and/or their individual employees.

Upon completion of a campaign phase, the relevant campaign participant (subcontractor or person) updates the campaign database. The participant responsible for the next phase can be notified quickly if the campaign database indicates the participant responsible for each campaign phase, and that participant is notified automatically. In other words, the participant responsible for a campaign phase does not have to check whether the previous phase has been completed. In practice, the database should indicate the relevant participant's electronic address, such as an e-mail address and/or mobile telephone number (for sending short messages).

Advertising agencies and media agencies are understandably reluctant to invest in high-bandwidth connections and terminals, because they do not need high-resolution images. However, if the advertising and media agencies cannot be tied to the centrally administered system, most benefits of the invention are lost. This problem is solved by a smart image database that can produce images at different resolutions as needed. Most campaign phases can be carried out with only low-resolution preview images. The only tasks producing or using high-resolution images are scanning, colour separation and printing (assuming printed advertisements are used). Thus if image scanning is performed by the repro, only two entities, namely the repro and the printer, need high-speed access to the smart image database. Further, the printer only needs unidirectional access which means that in some cases one or a few ADSL (Asynchronous Digital Subscriber Lines) lines are sufficient.

According to one preferred embodiment, a network operator provides high-speed access to the smart image database at points called control points. At the control points, the campaign owner can check the high-resolution work if necessary.

According to another preferred embodiment, after a participant is associated with a campaign (registered in the campaign database), all communication between subcontractors and/or participants takes place by means of formalized (consistent) messages which are easy to interpret both by humans and software programs. One way to enforce the formal nature of the message is communicating by means of HTML of WAP forms.

According to yet another preferred embodiment, the image database contains the images in a resolution-independent storage format. This feature enables image scaling to an arbitrary size and resolution without side effects, such as visible raster patterns or moiré effects.

According to yet another preferred embodiment, the campaign database indicates the required image size data (image size, resolution and/or pixel size) for each campaign task. This embodiment helps to automate image production, because the image size data do not have to be entered manually.

### Brief description of the drawings

The invention will be described in more detail by means of preferred embodiments with reference to the appended drawing wherein:
Figure 1 is a block diagram illustrating a preferred hardware arrangement according to the invention;
Figure 2 depicts a conventional way of modelling an information campaign;
Figures 3A and 3B, which form a single logical picture, depict an inventive method of modelling an information campaign;
Figure 4 shows a preferred software architecture for campaign management; and
Figure 5 illustrates how task data can be used to automate image production.

### Detailed description of the invention

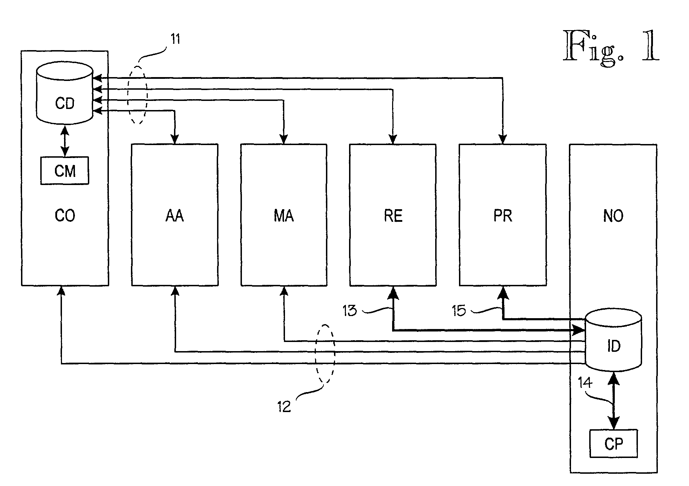

Figure 1 is a block diagram illustrating a preferred hardware arrangement according to the invention. Block CO depicts the campaign owner. The campaign owner CO manages a campaign database CD via a campaign manager CM. The campaign manager CM is a set of programs and user interfaces for managing the various tasks, participant data and financial data associated with the campaign. Blocks AA and MA depict the advertising and media agency, respectively. Block RE depicts the selected repro, and block PR depicts the printer. Block NO depicts the network operator. In this arrangement, the network operator NO manages an image database ID, because the network operator has the best capability to provide high-speed access to the image database. Thin arrows 11 and 12 depict slow-speed access to the campaign database CD and the image database ID. As shown by reference numeral 11, the subcontractors AA, MA, RE and PR require two-way access to the campaign database CD. The slow-speed access 11 can be implemented by means of a POTS (plain old telephone system) or ISDN line, for example. Alternatively, the slow-speed access 11 can be implemented via a permanent Internet connection which is shared via a local-area network.

In the example shown in Figure 1, the selected repro RE is the only entity requiring two-way high-speed access 13 to the image database ID. In this example, the repro RE scans and processes the images. A practical implementation of the repro's access 13 to the image database is an ATM line. The printer PR also requires a high-speed access 15 to the image database ID, but the printer's access can be unidirectional since the printer only has to read the images, not store them. Further, the printer only has to read the images once, whereas the repro often needs to store several versions of each image. Thus a reasonably small printer's access 15 to the image database can be an ADSL (Asynchronous Digital Subscriber Line). The campaign owner CO and the advertising and media agencies AA/MA only need a low-speed unidirectional access 12 to the image database ID.

Sometimes it is not convenient to rely only on the repro to scan the images. Accordingly, the network operator NO, which typically has several store and demonstration facilities in major towns, can provide control points CP in such facilities. The campaign owner and/or the advertising agency staff can scan and store high-resolution images via such control points. Naturally, the control points require a high-speed two-way access to the image database ID, but providing the high-speed access is trivial to the network operator.

The campaign database CD comprises the campaign owner's brandbook, a campaign calendar, task data, budget data and people data, such as name, identifier, role, contact data, etc. The brandbook is used to ensure consistent use of trademarks, logos, slogans, etc., as is common in the advertising business.

Although preferred, the arrangement shown in Figure 1 is by no means exclusive. The reason for placing the campaign database CD and the campaign manager CM within the campaign owner CO is that the campaign owner is probably willing to retain access control and grant and revoke access licenses to subcontractors as needed. Alternatively, the advertising agency AA or the network operator NO may offer campaign management as a professional service. The reason for placing the image database ID within the network operator NO is that the network operator is best able to provide high-speed access to the image database. Alternatively, the image database may be placed in any entity which provides such a high-speed access.

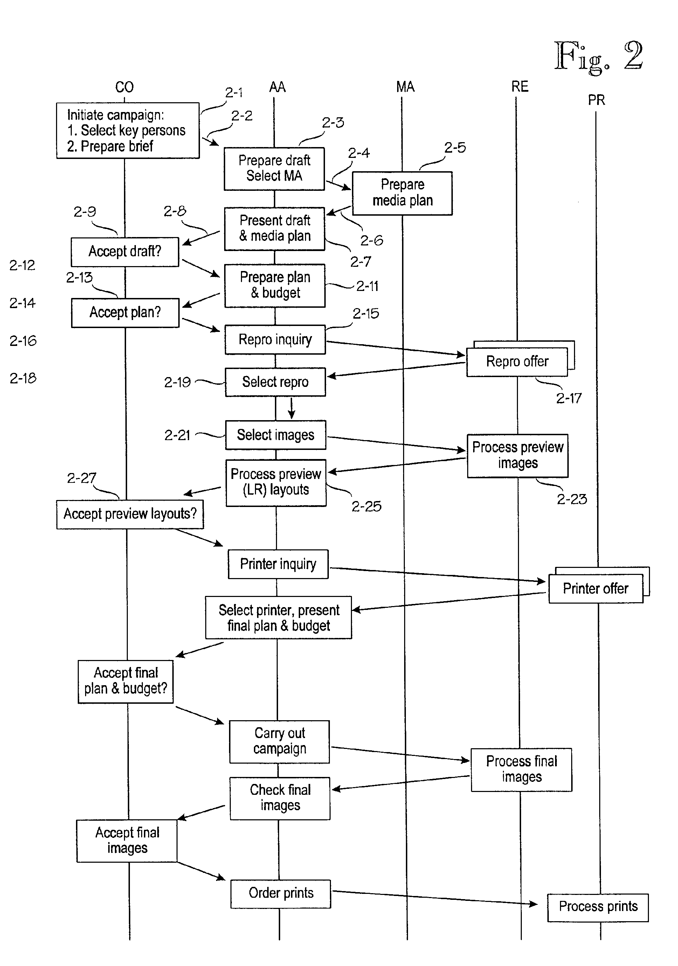

Figure 2 depicts a conventional way of executing and modelling an information campaign. (To be more precise, the particular combination of campaign tasks shown in Figure 2 may or may not be prior art, but the way of modelling the campaign is conventional.) Time advances from top to bottom. In step 2-1, the campaign owner CO initiates the campaign. This step comprises selecting key participants within the campaign owner CO and the advertising agency AA. In step 2-2, the campaign owner CO requests the advertising agency AA to prepare a (first) draft of the campaign. In step 2-3, the advertising agency AA prepares the draft and selects a media agency MA. In step 2-4, the advertising agency requests the media agency MA to prepare a media plan. In step 2-5, the media agency MA prepares the media plan, and sends it to the advertising agency AA in step 2-6. In step 2-7, the advertising agency AA combines the campaign draft and media plan, and presents the results to the campaign owner CO in step 2-8. In step 2-9, the campaign owner CO checks the draft and media plan. If the CO accepts the plans, the process continues. Otherwise, the plans are edited until the CO accepts them.

From this point on, the even-numbered signalling steps are not labelled or described separately. In step 2-11, the advertising agency AA prepares a (second) plan and a budget for the campaign, and the campaign owner CO accepts them in step 2-13. In step 2-15, the advertising agency AA sends inquiries to repros, and the repros send their offers in step 2-17. In step 2-19, the advertising agency AA selects a repro. In step 2-21, the advertising agency AA selects the campaign images, of which the repro processes preview (low-resolution) images in step 2-23. In step 2-25, the advertising agency AA prepares preview layouts, and the campaign owner checks them in step 2-27.

A drawback of the conventional campaign model shown in Figure 2 is related to the fact that each odd-numbered step is a signalling step in which responsibility is transferred from one entity to another, that is, between subcontractors or between the campaign owner and a subcontractor. In the conventional model, all such signalling steps require human attention and, accordingly, are potential delay sources. Although e-mail and short message services free parties from being at the ends of a communication channel simultaneously, there is still the risk of signalling a wrong person, for example because a person's address change is not reported to the person in charge of the previous step. Another drawback in the model shown in Figure 2 is that the campaign owner has little control of what happens between the various subcontractors. For instance, between steps 2-13 and 2-27 there are several steps which are beyond the control of the campaign owner.

Yet another problem with the mechanism shown in Figure 2 is that signalling steps between entities are informal, such as freely formatted e-mail messages or short messages, or telephone calls. The informal nature of the messages makes them prone to misunderstandings.

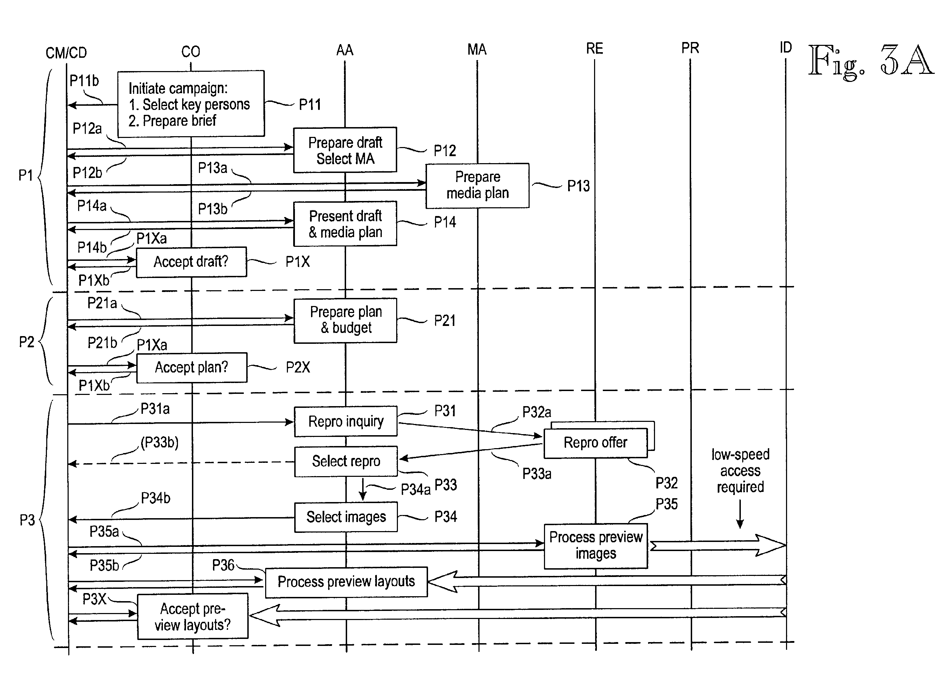

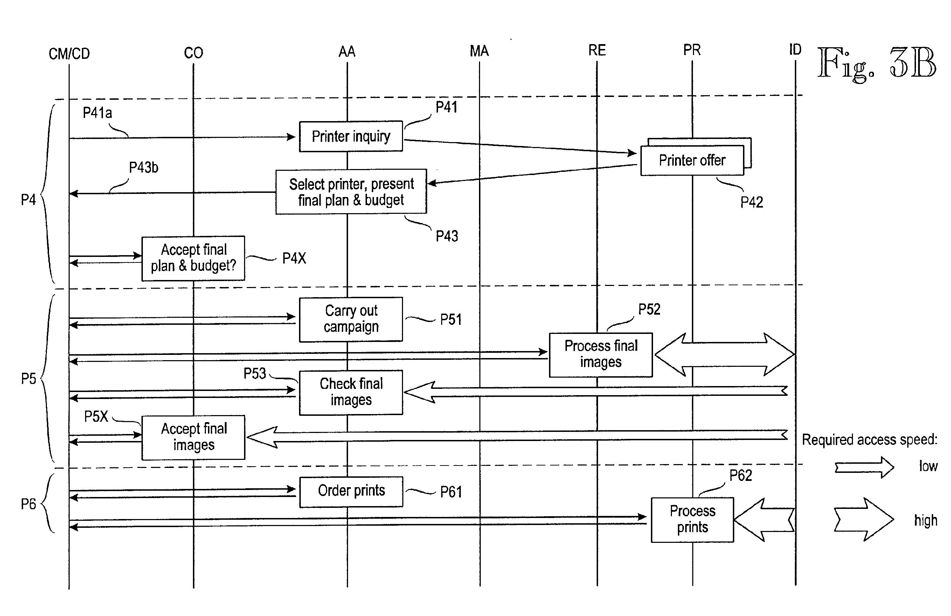

Figures 3A and 3B show a method according to the invention to model an information campaign. Figures 3A and 3B form a single logical picture. The model shown in Figures 3A and 3B comprises the campaign database and manager CM/CD and the image database ID. In this model, the campaign is divided into six phases P1 to P6. Each phase which is followed by another phase comprises one or more action tasks Pn1, Pn2, etc., and an acceptance task PnX, in which n is the number of the phase. For example, P11 to P14 are the action tasks of phase P1, and P1X is its acceptance task. Unlike the conventional model shown in Figure 2, the inventive campaign model is based on communication via the campaign database and manager CM/CD. Most action or acceptance tasks are preceded by a start signal and followed by an end signal from/to the campaign manager and database CM/CD. The reference sign of the start signal is the reference number of the task plus the letter "a". The end signal is denoted by the phase number plus the letter "b". There are some exceptions, however. The very first task, P11, naturally has no start signal. In task P11, the campaign is initiated, which comprises selecting the key persons and preparing the campaign brief. The key participants within the campaign owner CO and the advertising agency AA are entered into the campaign database CD. For this purpose, the campaign manager should have a personnel database as is common in financial and project database applications. The key persons are also given the necessary access rights. The advertising agency AA may be given the right to grant access rights to subcontractors selected by the advertising agency AA. Initiating the campaign also comprises assigning a project number for it. The project number is used to reserve directory and storage space in the image database ID.

The action and acceptance steps/tasks P11 to P3X have already been described in connection with Figure 2 (although they had different reference numbers). An essential departure from the model shown in Figure 2 is that in the model of Figures 3A and 3B, most signalling between tasks and participants takes place via the campaign manager/database CM/CD. In this example, we have assumed that the campaign owner has already selected the advertising agency to be used and the advertising agency selects the remaining subcontractors RE and PR. Thus for example, the acceptance task of phase 2, P2X, is followed by an end signal P2Xb to the CM/CD. In response to this signal, the campaign manager CM retrieves the address data of the participant responsible for the next task P31 (repro inquiry) and sends a start signal P31a to this participant. However, task P31 cannot be immediately followed by an end signal to the campaign manager/database CM/CD, because this task requires entities which are not registered into the campaign database. Thus the signal task P32a is an inquiry to the repros known by the advertising agency, and task P33a is the response (offer) from the repros. Another reason to bypass the campaign manager/database is that one subcontractor performs several consecutive tasks, like the tasks P33 (select repro) and P34 (select images), in which case there is no compelling need to inform the CM/CD. After completion of task P34, the CM/CD is informed in task P34b. In this example, task P34b comprises the address data of the repro and the fact that the campaign images have been selected. (Alternatively, the CM/CD can be informed about the selected repro by a separate signal P33b, in which case signal P34a would be sent from the CM/CD). As a result of task P34b, CM/CD sends a start signal P35a to the repro RE which stores the preview (low-resolution) images to the image database ID and enters the completion of task P35 to the CM/CD (signal P35b).

The remaining campaign tasks P41 to P62 can be understood without a detailed description. It is interesting to note that only the first contact to each subcontractor RE and PR takes place via conventional means (and require human attention). After the selected subcontractors and their address data have been entered into the campaign database, all signalling takes place automatically by the campaign manager software.

As seen from Figures 3A and 3B, there is only one task, namely P52, which requires bidirectional high-speed access to the image database ID. The printing task P62 also requires high-speed access but in one direction only.

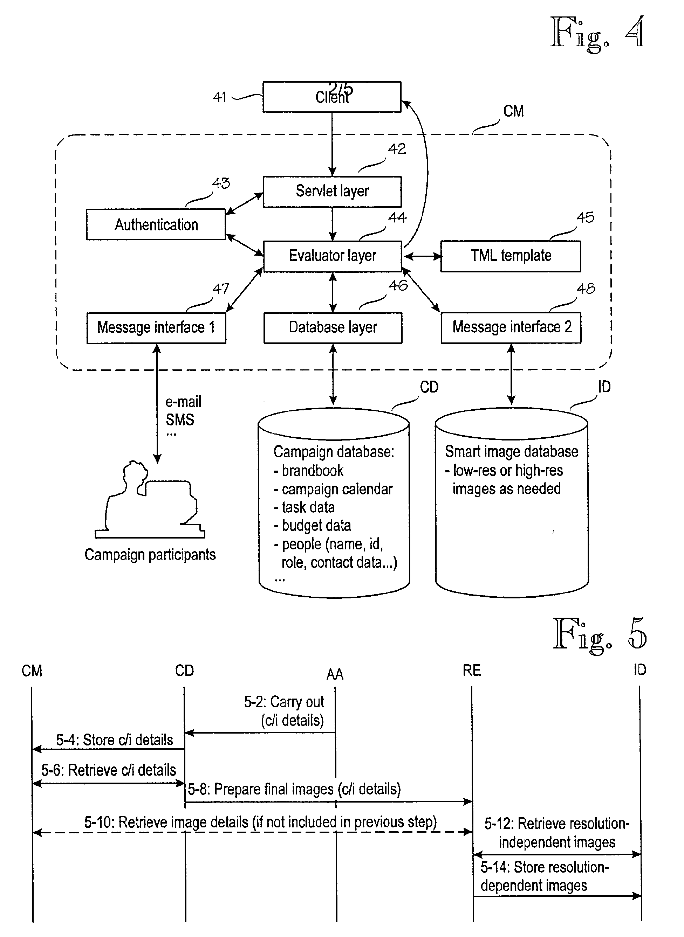

Figure 4 shows a preferred software architecture for campaign management. Block 41 is the client system, which in practice can be an Internet browser, such as Microsoft® Internet Explorer. Because only HTML pages and, optionally, short JavaScript functions are loaded to the client system, the system is very light from the client's point of view.

A servlet (server applet) module 42 is the client's entry point to the campaign management system, there is a gateway servlet which receives user requests and calls different evaluators or other classes to carry out the actual processing. The servlet module 42 also participates in authentication, but the authentication is completed in a separate authentication module 43.

An evaluator module 44 includes one evaluator for each view in the user interfaces. Each evaluator implements all the functionality in its user interface view. In cases where the user interface view is different for different user profiles, some authentication functionality is also included in the corresponding evaluator. The evaluators generate the user interface views dynamically from template files 45 and from content which can be retrieved, for example, from the campaign database on the basis of the client's http request. In a web browser environment, the user interface typically consists of HTML pages with forms for interaction and simple JavaScript functions.

A database layer 46 provides an interface to the campaign database CD. The database layer 46 hides the details from the upper layers. The actual services provided by the campaign manager CM are built on top of the functions of the database layer. A benefit of a separate database layer is that no changes are required anywhere else in the campaign manager CM if the database engine has to be changed for some reason.

The database layer 46 handles all database connections (reference 11 in Figure 1) by means of a connection pool. The database layer 46 can limit the number of simultaneous connections so as not to overload the database. It opens up new connections if needed and reuses old connections if available.

The campaign manager CM also comprises a messaging interface which is an essential part of the system. There are actually two different messaging interfaces. A first messaging interface 47 is used for sending messages to campaign participants (persons) and a second messaging interface 48 is used for sending messages to the smart image database ID.

The first (inter-participant) messaging interface 47 uses two kinds of signalling. Some of the event notifications are made in the campaign manager itself. However, there are some critical points in the campaign which require instant notification to key participants of the campaign so that they can perform the necessary actions. The critical points are typically events in which the responsibility changes from one subcontractor to another or from the campaign owner to a subcontractor or vice versa.

The authentication module 43 has two major tasks. It completely excludes entries from persons not associated with any campaign. It also enforces the rights of campaign participants and cooperates with the evaluator layer 44 (which in turn cooperates with the TML template files 45) to customize the user interface views to the various campaign participants. The following table 1 shows an example of possible rights and user interface (UI) sections available to different participants. In the table, an 'own campaign' is a shorthand notation for a campaign in which the person in question is a participant.

**Table 1**

| No. | Role | Rights | UI sections |
|---|---|---|---|
| 1 | CO superusers | See all campaigns | Brandbook, campaign calendar, all past/present campaigns, products and services |
| 2 | CO marketing managers | As in 1 | As in 1 |
| 3 | CO marketing personnel | See own campaigns | Brandbook, campaign calendar, own campaigns, products and services |
| 4 | AA personnel type a | See/use own campaigns | Brandbook, campaign calendar, own campaigns and products and services relating to own campaigns |
| 5 | AA personnel type b | See own campaigns | As in 4 |
| 6 | MA personnel | See some sections of own campaigns (basic info, media plan data) | As in 4 |
| 7 | RE personnel type a | See/use some sections of own campaigns (inquiries, own responses, campaign material) | Brandbook, campaign calendar, own campaigns and products and services relating to own campaigns, info on past campaigns |
| 8 | RE personnel type b | See some sections of own campaigns (inquiries, own responses, campaign material) | Brandbook, limited view to own campaigns |
| 9 | PR personnel | See some sections of own campaigns (inquiries, own responses, images) | As in 8 |
| 10 | CP user | Full rights (see/use all campaigns ...) | As in 1 |

The campaign manager CM accepts and executes the following messages, for instance:
- Create_campaign (command_id, command_code, campaign_id, issuer, timestamp, receiver (host_name, host_address_, database_instance))
- Delete_campaign (same parameters as above)
- Create_user (command_id, command_code, user_id, password, issuer, timestamp, receiver (host_name, host_address_, database_instance))
- Change_password (same parameters as above but no password)
- Delete_user (same parameters as above)
- Assign_user_to_campaign (command_id, command_code, campaign_id, user_id, role, issuer, timestamp, receiver (host_name, host_address_, database_instance))
- Remove_user_from_campaign (same parameters as above but no role)

The command_code determines the type of command (what the command does). The command_id is a unique parameter identifier assigned to every command within a campaign. It can be used, for example, in the http responses to inform about the results of the command. The role parameter in the Assign_user_to_campaign command refers to the role column in table 1 and determines the user's rights within the campaign manager and the databases. Other parameters are believed to be self-explanatory.

In practice, the authentication can be implemented by cookie technology with bitmaps such that each bit in the bitmap grants the right to use a given part of the system. After logging into the system, the user receives the bitmap with a keyed hash over the bitmap and user identifier. The hash value can be used to verify that the user has not changed the bitmap.

Because most or all communication between subcontractors and/or participants takes place by means of formalized (consistent) messages, such as HTML of WAP forms, the messages are easy to interpret both by humans and software programs.

Figure 5 illustrates how the task data (campaign and image details) can be used to automate image production in different required versions (sizes, resolutions, colour separations, etc.). Step 5-2 corresponds to task P51 of Figure 3B, in which the advertising agency sends the other subcontractors a message to carry out the campaign. This message is received by the campaign manager CM and stored in the campaign database CD in step 5-4. The message or an appendix of it contains the campaign and image details. For the purposes of Figure 5, such detail data mainly indicates what kinds of images will be required. Alternatively, the campaign/image detail data may have been stored earlier, in which case the message 5-2 is only a "go ahead" message. In step 5-6, the campaign manager CM retrieves the campaign/image detail data (or uses the data still in its memory as a result of the previous step) and sends the detail data to the repro RE as part of an instruction 5-8 to prepare the final images. If the instruction 5-8 or its appendix do not contain the campaign/image detail data, they are retrieved in a separate step 5-10. In step 5-12, the repro RE retrieves resolution-independent images from the smart image database. In step 5-14, the repro produces resolution-dependent images on the basis of the campaign/image detail data. On the basis of the required image size and resolution, the campaign manager software or the repro software or the smart image database can automatically calculate the required image sizes which helps to eliminate errors. In this way, the repro work can be largely automated.

According to a yet further preferred embodiment, the actual repro software, namely the image-calculating portion, is incorporated into the smart image database ID, and the repro personnel only need a user interface to the image-calculating portion. For instance, a high-resolution image may require hundreds of megabytes, whereas the user's monitor only requires a preview version of a few megabytes. This remote-control repro further eliminates the need for high-bandwidth access to the image database.

A practical realization has been implemented by the assignee of this application using the following technology. The campaign manager runs on an Intel® Pentium III processor with 512 MB of RAM, 2 * 15 GB of hard disk space and 100 Mbit/s Ethernet® adapters. The operating system is Windows NT, and the database technology is by Oracle®. The image database runs on a Sun 450 computer with four processors, 1 GB of RAM and 90 GB of RAID disks. The operating system is Solaris. The software for the smart image database which stores images in a resolution-independent format is sold under the name of "Prelude" by Digital Zone International in Denmark (see www.digitalzone.dk).

While the above description relates to producing printed advertisements, it is apparent to one skilled in the art that the invention can be used to manage advertising or information campaigns involving other media types as well, such as audio/video or Internet images.

## Claims

1. A method of managing an information campaign having several tasks (P11 to P62), many of which relate to processing of images, the method being **characterized by**:
centrally administering a campaign database (CD) and an image database (ID);
entering into the campaign database (CD) the contact data of the participant responsible for each campaign task (P11 to P62);
in response to the completion of a campaign task, updating the campaign database (CD);
in response to the updating step, determining on the basis of the campaign database (CD) the contact data of the participant responsible for the next campaign task and automatically informing this participant about the completion of the preceding campaign task; and
producing different resolutions of the images of the image database (ID) depending on the campaign task (P11 to P62) in question.

2. A method according to claim 1, **characterized in that** the campaign database (CD) indicates the required image resolution for each campaign task (P11 - P62).

3. A method according to claim 1 or 2, **characterized by** producing the high-resolution images by an image processing computer locally connected to the image database, and remotely controlling the image processing computer.

4. A method according to any one of the preceding claims, **characterized in that** a network operator provides a control point (CP) having wide-band access (14) to the image database (ID).

5. A method according to any one of the preceding claims, c h aracterized in that some campaign tasks are carried out by one or more subcontractors (AA, MA, RE, PR) of the campaign owner (CO), and the one or more subcontractors are given access rights to the databases (CD, ID) according to a predefined list which defines the rights to several different types of subcontractors.

6. A method according to claim 5, **characterized in that** at least some of the subcontractors (AA) can grant access rights to other subcontractors (MA, RE, PR).

7. A method according to any one of the preceding claims, **characterized in that** the image database (ID) contains images in a resolution-independent storage format.

8. A computer arrangement for managing an information campaign having several tasks (P11 to P62), many of which relate to processing of images, **characterized by**:
a centrally administered campaign database (CD) and image database (ID), the campaign database (CD) being adapted to contain the contact data of the participant responsible for each campaign task (P11 to P62);
means responsive to the completion of a campaign task for updating the campaign database (CD);
means for determining on the basis of the campaign database (CD) the contact data of the participant responsible for the next campaign task and for automatically informing this participant about the completion of the preceding campaign task; and
means for producing different resolutions of the images of the image database (ID) depending on the campaign task (P11 to P62) in question.

9. A program set, executable in a computer arrangement, **characterized in that** executing the program set in the computer arrangement causes the computer arrangement to perform the method steps of claim 1.
